# EUROPÄISCHE PATENTSCHRIFT

(11) **EP 0 447 613 B1**
(45) Veröffentlichungstag und Bekanntmachung des Hinweises auf die Patenterteilung: **02.01.1997**
(21) Anmeldenummer: 90119782.2
(22) Anmeldetag: 16.10.1990
(51) Int. Cl.: G01N 1/12, C21C 5/46

(54) **Probennehmer für Metallschmelze**
Sampler for molten metals
Echantillonneur pour métaux liquides

(30) Priorität: 22.03.1990 DE 4009167
(43) Veröffentlichungstag der Anmeldung: 25.09.1991
(73) Patentinhaber: Heraeus Electro-Nite International N.V., 2000 Antwerpen (BE)
(72) Erfinder: Baerts, Christiaan Eugene Edouad, B-3940 Beringen-Paal (BE)
(74) Vertreter: Kühn, Hans-Christian

(56) Entgegenhaltungen:
- DE-U- 8 707 781
- FR-A- 2 254 249
- FR-A- 2 406 822

## Beschreibung

Die vorliegende Erfindung betrifft einen Probennehmer für Metallschmelze mit mindestens zwei schalenförmigen, metallischen Teilkörpern, die so zueinander angeordnet sind, daß ihre Stirnflächen gegenüberliegen, wobei die metallischen Teilkörper eine Probennahme-Kammer bilden, und mit einem über eine Mündung in die Kammer mündenden Einlaufstutzen, wobei die durch die schalenförmigen metallischen Teilkörper gebildete Kammer in mindestens zwei Kammer-Bereiche unterschiedlicher Dicke unterteilt ist, wobei diese Kammer-Bereiche in Richtung des Einlaufstutzens in Richtung des einfließenden Metalls gesehen hintereinander liegen und jeweils von einer Abstufung, die eine Prallfläche für das flüssige Metall bildet, voneinander getrennt sind, wobei der Kammer-Bereich mit der geringeren Dicke das dem Einlaufstutzen gegenüberliegende Ende der Probennahme-Kammer bildet.

Derartige Probennehmer sind bekannt, beispielsweise aus der BE-PS 871 391 oder der DE-OS 35 40 228. Diese Probennehmer können Teil eines Meßkopfes sein, mit denen dann sowohl Messungen in Metallschmelzen durchgeführt werden als auch eine Probe dieser Metallschmelze entnommen wird. Der Probennehmer besteht aus zwei identischen Hälften oder Halbschalen, die einen Hohlraum oder eine Kammer umschließen. Die beiden Teilkörper des Probennehmers werden mit einer Federklammer zusammengeklemmt. In die Kammer mündet an ihrem vorderen Ende ein Einlaufstutzen für das flüssige Metall. Nachdem die Meßlanze, an deren Ende sich der Meßkopf mit dem Probennehmer befindet, aus der zu analysierenden Metallschmelze herausgezogen wurde, kann der Probennehmer dem Meßkopf entnommen werden. In dem Probennehmer befindet sich dann die erstarrte Probe der Metallschmelze, die anschließend durch Aufbrechen des Probennehmers im Bereich der zwei schalenförmigen, metallischen Teilkörper, die die Kammer umschließen, herausgenommen werden kann. Die üblichen Kammern sind so geformt, daß sich flache, scheibenförmige Metall-Proben ergeben. Die Kammer des Probennehmers kann gegebenenfalls in zwei Kammern unterteilt sein, wobei die vom Einlaufstutzen abgewandte Kammer üblicherweise eine wesentlich kleinere Dicke aufweist als die näherliegende Kammer. Hierdurch ergibt sich eine Probe mit einem dickeren Bereich und einem dünneren Bereich, die zur Analyse des Metalles herangezogen werden können.

Damit die metallischen Teilkörper während der Lagerhaltung nicht korrodieren, werden sie galvanisch verzinkt.

Es zeigt sich, daß das Aufbrechen der zwei schalenförmigen, metallischen Teilkörper problematisch ist, da sich das flüssige Metall beim Erstarren mit den Teilkörpern verbindet. Diese Verbindung kann derart fest sein, daß die Teilkörper mechanisch entfernt werden müssen, was sehr aufwendig sein kann. Selbst wenn die Teilkörper unter großer Krafteinwirkung voneinander trennbar sind ist zu beobachten, daß Teile der Teilkörper an der Metall-Probe haften, wodurch die Metall-Probe verunreinigt wird. Da die Teilkörper mit Zink galvanisch beschichtet sind, wird die Probe und durch dieses Zink verunreinigt oder neigt zur Porenbildung, so daß die spätere Analyse der Probe ein verfälschtes Ergebnis der Probe liefert. Außerdem wird durch die mechanische Einwirkung auf die Probe beim Aufbrechen der Teilkörper , falls diese an der Probe haften, das Gefüge der Metall-Probe beeinflußt und die Metall-Probe verbogen, so daß für ein späteres Ausstanzen irgendwelcher Teilbereiche der Probe eine ebene Anlagefläche der Probe nicht gegeben ist.

Aus DE-U-8707781 ist eine kugelförmige Probenkammer zur Liquidusbestimmung in Stahlschmelzen bekannt. Zweck dieser Vorrichtung ist es, eine gleichmäßige Erstarrung der Schmelze, ausgehend vom Kugelumfang, zu erzielen und während der Erstarrung den Temperaturverlauf zu messen. Die hier beschriebene Kammer ist eine ausschließliche Meßkammer; die Proben sind für anschließende weitere Analysen weder geeignet noch vorgesehen. Die Innenflächen der Kammer sind mit einer Schicht aus Kalkmilch oder Tonerde überzogen. Dabei ist es notwendig, um die einwandfreie Funktion der Probenkammer zu gewährleisten, daß der gesamte Hohlraum möglichst gleichmäßig beschichtet ist, um eine gleichmäßige Wärmeisolierung und damit ein gleichmäßiges Erstarren der Metallschmelze zu gewährleisten. Eine derartige Schicht liegt vor dem Auftragen in flüssiger Form vor und wird auf die Innenflächen der Kammer aufgestrichen. Beim Einlaufen der Metallschmelze in die Kammer verdampft das Bindemittel (Wasser), so daß eine porige, körnige Schicht verbleibt, die nicht abriebfest ist. Partikel dieser Schicht durchsetzen die Oberfläche der einlaufenden Metallschmelze und dringen in diese ein, so daß die Metallprobe für eine anschließende Analyse nicht geeignet ist.

Der Erfindung liegt nun die Aufgabe zugrunde, einen Probennehmer der bekannten Art so auszubilden, daß eine einfache und schnelle Entnahme der Probe, das heißt ein einfaches Zerlegen der metallischen Teilkörper des Probennehmers, nach Erstarren des flüssigen Metalles möglich ist.

Diese Aufgabe wird gemäß Anspruch 1 dadurch gelöst, daß die Kammer wenigstens im Bereich der Mündung und dem der Mündung gegenüberliegenden, die Prallfläche für das einströmende Metall bildenden Wandbereich mit einer abriebfesten, bis etwa 1700° C temperaturstabilen Schicht überzogen ist, wobei die von dem Einlaufstutzen in Richtung des einströmenden Metalls gesehen am weitesten entfernt liegende Wand unbeschichtet bleibt, und daß die Stirnflächen der schalenförmigen Teilkörper von dem abriebfesten Überzugsmaterial beschichtungsfrei verbleiben. Unter abriebfest ist zu verstehen, daß diese Schicht mit den metallischen Teilkörpern verbunden bleibt sowohl während der Lagerung als beim Einfließen des flüssigen Metalls. Unter stabil im Temperaturbereich bis etwa 1700° C wird verstanden, daß die Schicht in Beziehung mit flüssigem Stahl nicht zersetzt wird, oder wesentliche chemische oder physische Änderungen aufweist. Dadurch, daß sowohl der Bereich der Mündung als auch der der Mündung gegenüberliegende Wandbereich mit der abriebfesten Schicht überzogen sind, sind gerade die Bereiche der Probenkammer beschichtet, auf die das sehr heiße in die Probenkammer einströmende, flüssige Metall auftrifft. Gerade diese Bereiche neigen bei einem unbeschichteten Probennehmer dazu, daß das flüssige Metall sich beim Erstarren mit dem Probennehmer verbindet. Die Prallfläche bildet die unmittelbar dem Einlaufstutzen gegenüberliegende Wandfläche, auf die das in die Probenkammer einströmende flüssige Metall auftrifft. Bei einem solchen in mehrere Teil-Kammern unterteilten Probennehmer erübrigt es sich, die von dem Einlaufstutzen in Richtung des einströmenden Metalles gesehen am weitestens entfernt liegende Wand der Probenkammer zu beschichten, da das dort auftreffende Metall durch das sich bildende Gaspolster ein unmittelbares Verbinden mit den Wandbereichen der Probenkammer verhindert. Durch die unbeschichteten Stirnflächen der schalenförmigen, metallischen Teilkörper ist eine passgenaue Ausrichtung der Teilkörper gegeben. Auch wird dadurch erreicht, daß das flüssige Metall dort schneller abkühlt und damit die Bildung eines Grades zwischen den Stirnflächen, zwischen die ansonsten flüssiges Metall fließt, unterbunden werden kann. Da nur Bereiche der Probennahme-Kammer beschichtet werden, die als kritisch anzusehen sind, wird das benötigte Material für die abriebfeste Schicht sehr gering gehalten. Die nicht zu beschichtenden Bereiche können beim Aufbringen der abriebfesten Schicht mit einer entsprechenden Maske abgedeckt werden.

Eine Dicke der abriebfesten Schicht von 5 bis 200 Mikro-Meter, bevorzugt von 30 bis 100 Mikro-Meter, hat sich als ausreichend erwiesen. Besonders gute Ergebnisse hinsichtlich des Nichthaftens der abriebfesten Schicht und folglich die Qualität der erstarrten Probenoberfläche werden mit einer Dicke der abriebfesten Schicht von etwa 60 Mikro-Meter erreicht; die Dicke der Schicht kann im Bereich von ± 10 Mikro-Meter schwanken.

Die beschichteten Teile des Probennehmers sollten sich wenigstens im Bereich der Mündung etwa bis zur Hälfte seiner Länge in den Einlaufstutzen hinein erstrecken und den Bereich der Wände der Probenkammer etwa 5 mm in die Probennahme-Kammer hinein überziehen.

Auch im Bereich der Abstufung oder Prallfläche hat es sich als vorteilhaft erwiesen, die daran angrenzenden Wände der Kammer in einem Bereich von mindestens 5 mm mit der abriebfesten Schicht zu bedecken.

Bei einem Probennehmer mit einer Kammer, die eine größere Breite als Höhe quer zur Einlaufrichtung des Metalls aufweist, sollten bevorzugt im Rahmen einer großflächigen Beschichtung die Wände mit der größeren Breite vollständig beschichtet sein.

Bevorzugt wird eine abriebfeste Schicht in Form einer keramischen Schicht aufgebracht. Besonders gute Ergebnisse werden mit einer keramischen Schicht in Form einer im wesentlichen oxidischen Schicht erzielt. Es hat sich gezeigt, daß gerade mit einer solchen oxidischen Schicht die metallischen Teilkörper des Probennehmers leicht trennbar und die erstarrte Probe herausnehmbar ist. Bevorzugt werden oxidische Schichten aus Al₂O₃ und ZrO₂ verwendet. Vor allem die Beschichtung mit Al₂O₃ ist billig und einfach aufzutragen, während eine Schicht aus ZrO₂ bevorzugt wird, wenn die Temperatur der Schmelze 100°C überschreitet. Diese Schichten haben den Vorteil, daß sie den eigentlichen Abkühlvorgang der Metall-Probe nur wenig beeinflußen, da sie eine gute Wärmeleitfähigkeit aufweisen. Auch enthalten sie keine Bindemittel oder sonstige Materialien, die zur Vergasung oder zum Auflösen neigen. Außerdem ist mit diesen Schichten eine sehr dünne und glatte Oberfläche erreichbar.

Weiterhin hat sich als abriebfeste Schicht eine im wesentlichen aus Nitriden bestehende Schicht im Hinblick auf ein leichtes Öffnen des Probennehmers nach Erstarren des flüssigen Metalles als vorteilhaft erwiesen, insbesondere bei Schmelzen mit hoher Temperatur. Solche Schichten haben den Vorteil, daß die damit erzielbare Oberfläche sehr abriebsfest ist und eine hinsichtlich der Poren sehr dichte und geschlossene Oberfläche bilden. Als Auftrageverfahren für die abriebfeste Schicht auf die zu beschichtenden Flächen der Probennahme-Kammer hat sich das Plasmaspritzen und das Flammspritzen als vorteilhaft erwiesen. Insbesondere mit dem Plasmaspritzen ist eine sehr gleichmäßige, dünne Schicht erzielbar. Das Aufbringen einer Schicht mittels Flammspritzen hat sich dann als vorteilhaft bewährt, wenn ein billiges Beschichtungsverfahren erwünscht ist.

Weitere Einzelheiten und Merkmale der Erfindung ergeben sich aus der nachfolgenden Beschreibung eines Ausführungsbeipieles anhand der Zeichnung. In der Zeichnung zeigt
- Figur 1:: eine Draufsicht auf einen Teilkörper eines Probennehmers mit zwei Kammer-Bereichen,
- Figur 2:: einen Längsschnitt entlang der Schnittlinie II-II in Figur 1,
- Figur 3:: eine teilweise geschnittene Darstellung des Probennehmers nach Figur 1, wie er in einem Meßkopf eingesetzt ist,
- Figur 4:: einen Schnitt entlang der Schnittlinie lV-lV in Figur 3.

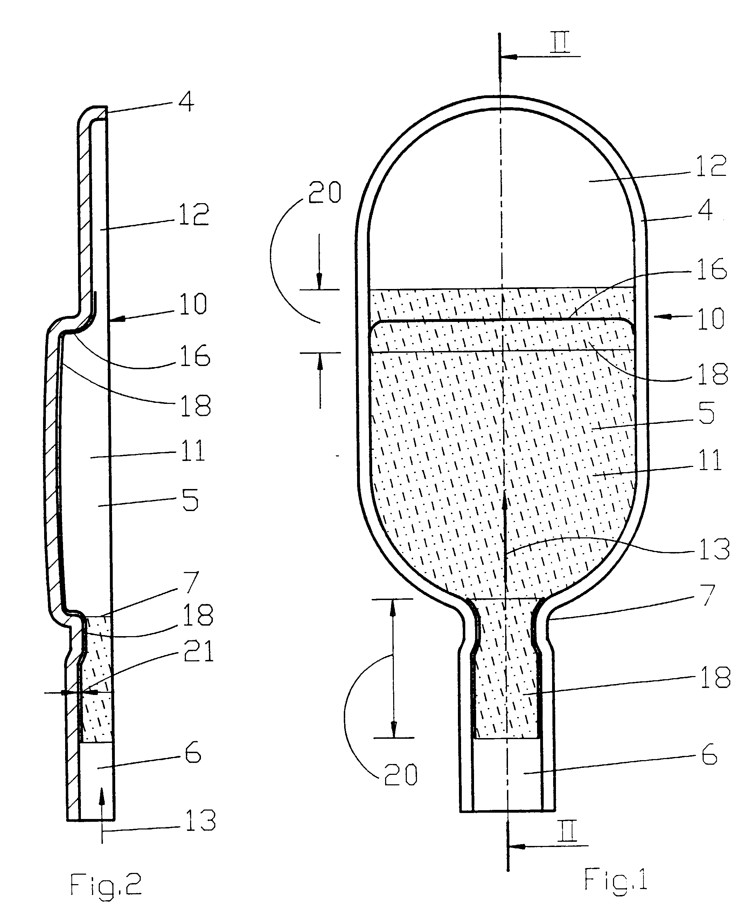

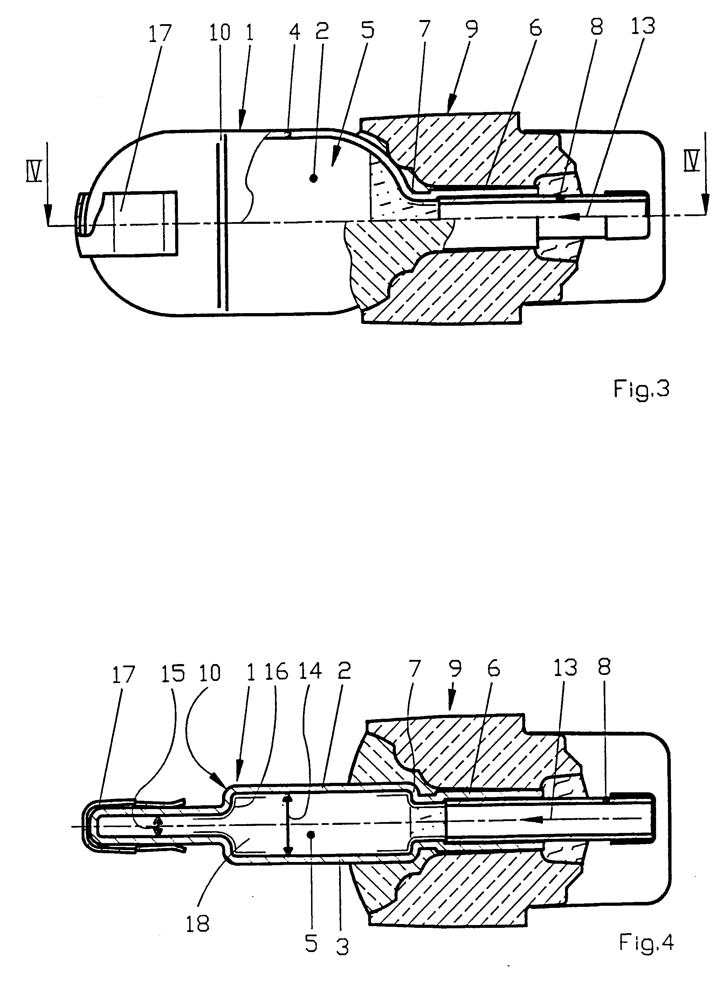

Der Probennehmer 1 nach den Figuren 1 und 2, sowie der Probennehmer 1 nach den Figuren 3 und 4 weist zwei identisch aufgebaute schalenförmige, metallische Teilkörper 2, 3 auf, die mit ihren Stirnflächen 4 aufeinander liegen und so eine Kammer 5 umschließen. Von dem Probennehmer 1 ist in Figur 1 nur einer der Teilkörper 2, 3 in einer Draufsicht gezeigt, während die Figuren 3 und 4 den kompletten, aus den zwei schalenförmigen, metallischen Teilkörpern 2, 3 zusammengesetzten Probennehmer 1 zeigen, der dort in das Ende eines Meßkopfes 9 eingesetzt ist. in diese Kammer 5 mündet ein Einlaufstutzen 6, wobei dieser Einlaufstutzen 6 im Bereich seiner Mündung 7 in die Kammer 5 geringfügig verengt ausgebildet ist. Die Verengung dient als Anschlagbereich für ein Quarzröhrchen 8, das in den Einlaufstutzen 6, wie dies die Figuren 3 und 4 zeigen, eingesetzt ist.

Der Probennehmer ist durch eine Abstufung 10 in zwei Kammer-Bereiche 11, 12 unterteilt. In Richtung des über den Einlaufstutzen 6 einströmenden flüssigen Metalles gesehen, wobei diese Einströmrichtung in den Figuren durch den Strömungspfeil 13 angedeutet ist, liegt der Kammer-Bereich 11 mit der größeren Breite 14 näher an der Mündung 7 des Einlaufstutzens 6, während der Kammer-Bereich 12 mit der geringeren Breite 15 in Strömungsrichtung 13 gesehen das Ende der Kammer bildet. Durch die Abstufung 10, die in etwa rechtwinklig zu den seitlichen Wänden des Probennehmers 1 verläuft, entsteht eine Prallfläche 16, auf die das in den Probennehmer 1 einströmende flüssige Metall auftrifft. Wie ebenfalls die Figuren 3 und 4 zeigen, werden die Teilkörper 2, 3 des Probennehmers 1 mittels einer Feder-Klammer 17 zusammengehalten.

Die kritischen Bereiche der Kammer 5 des Probennehmers 1 sind mit einer abriebfesten Schicht 18 überzogen. Diese kritischen Bereiche sind der Bereich der Mündung 7 des Einlaufstutzens 6 in die Kammer 5 sowie der gegenüberliegende die Prallfläche für das einströmende Metall bildenden Wandbereich 16 des Probennehmers 1. Diese Bereiche neigen dazu, daß sich das flüssige Metall mit den metallischen Teilkörpern 2, 3 verbinden würde, falls diese abriebfesten Schichten 18 nicht vorgesehen wären. Die Breite 20 der abriebfesten Schicht 18, in Strömungsrichtung 13 gesehen, erstreckt sich von der Mündung 7, aus in die Hälfte des Einlaufstutzen 6 hinein und über einen Bereich von 5 mm in die Kammer 5. Entsprechend ist die Kammer 5 um eine Breite 20 von 5 mm von dem Wandbereich 16 aus gesehen beschichtet.

Die Beschichtung besteht aus Al₂O₃ oder ZrO₂ mit einer Schichtdicke 21 von etwa 60 µm.

Bei einem Probennehmer 1 mit der in die zwei Kammer-Bereiche 11, 12 unterteilten Kammer 5 ist wesentlich, daß , wie die Figuren 1 und 2 zeigen, zumindest die Prallfläche 16 mit einer abriebfesten Schicht 18 beschichtet ist. Auch im Bereich dieser Prallflächen 16 - eigentlich handelt es sich bei dieser Prallfläche 16 um zwei einzelne Flächen des einen Teilkörpers 2 und des anderen Teilkörpers 3 ist die keramische Schicht in Strömungsrichtung 13 des flüssigen Metalles gesehen in einer Breite 20 ausgeführt derart, daß die Beschichtung 5 mm vor der Prallfläche 16 beginnt und 5 mm nach der Prallfläche endet.

Falls es erforderlich wird, kann die gesamte Kammer 5, das heißt die Wände der Kammer 11 mit der größten Breite quer zur Strömungsrichtung, mit der abriebfesten Schicht 18 überzogen werden. Eine solche durchgehende Beschichtung ist in den Figuren 1 und 2 des Probennehmers 1 gezeigt. Eine solche durchgehende keramische Schicht 18 ist allerdings bei dem in dem Meßkopf 9 eingesetzten Probennehmer 1 der Figuren 3 und 4 nicht gezeigt, wobei es sich für einen solchen Probennehmer 1 mit zwei Kammer-Bereichen als ausreichend erwiesen hat, daß nur der Kammer-Bereich 11 mit der großen Breite 14 beschichtet wird, wobei auch hier die Beschichtung in Richtung des Strömungspfeiles 13 gesehen etwa 5 mm im Anschluß an die Prallfläche 16 sich in den Kammer-Bereich 12 mit der kleineren Breite 15 hinein erstreckt.

Um dem Probennehmer 1, wie er in Figur 3 und 4 gezeigt ist, die erstarrte Probe zu entnehmen, wird der Probennehmer 1 aus dem Meßkopf 9 herausgebrochen, die Feder-Klammer 17 gelöst und werden die beiden Teilkörper 2, 3 voneinander getrennt. Durch die Beschichtung der Innenseiten der Probennahme-Kammer 5 mit der abriebfesten Schicht 18 lassen sich die beiden Teilkörper 2, 3 leicht voneinander trennen, ohne daß diese an der Probe haften.

## Patentansprüche

1. Probennehmer (1) für Metallschmelze mit mindestens zwei schalenförmigen, metallischen Teilkörpern (2,3), die so zueinander angeordnet sind, daß ihre Stirnflächen (4) gegenüberliegen, wobei die metallischen Teilkörper eine Probennahme-Kammer (5) bilden und mit einem über eine Mündung (7) in die Kammer mündenden Einlaufstutzen (6), wobei die durch die schalenförmigen, metallischen Teilkörper gebildete Kammer in mindestens zwei Kammer-Bereiche (11,12) unterschiedlicher Dikke unterteilt ist, wobei diese Kammer-Bereiche in Richtung des Einlaufstutzens in Richtung des einfließenden Metalls gesehen hintereinander liegen und jeweils von einer Abstufung (10), die eine Prallfläche (16) für das flüssige Metall bildet, voneinander getrennt sind, wobei der Kammer-Bereich (12) mit der geringeren Dicke (15) das dem Einlaufstutzen gegenüberliegende Ende der Probennahme-Kammer bildet, dadurch gekennzeichnet, daß die Kammer (5) wenigstens im Bereich der Mündung (7) und dem der Mündung (7), gegenüberliegenden, die Prallfläche für das einströmende Metall bildenden Wandbereich (16) mit einer abriebfesten, bis etwa 1700°C temperaturstabilen Schicht (18) überzogen ist, wobei die von dem Einlaufstutzen (6) in Richtung des einströmenden Metalles gesehen am weitesten entfernt liegende Wand unbeschichtet bleibt, und daß die Stirnflächen (4) der schalenförmigen Teilkörper (2,3) von dem abriebfesten Überzugsmaterial beschichtungsfrei verbleiben.

2. Probennehmer nach Anspruch 1, dadurch gekennzeichnet, daß die abriebfeste Schicht (18) eine Dicke von 5 bis 200 Mikrometer aufweist.

3. Probennehmer nach Anspruch 2, dadurch gekennzeichnet, daß die abriebfeste Schicht (18) eine Dicke von 30 bis 100 Mikrometer aufweist.

4. Probennehmer nach Anspruch 3, dadurch gekennzeichnet, daß die abriebfeste Schicht (18) eine Dicke von etwa 60 Mikrometer aufweist.

5. Probennehmer nach einem der Ansprüche 1 bis 4, dadurch gekennzeichnet, daß die abriebfeste Schicht (18) von der Mündung (7) aus den Bereich des Einlaufstutzens (6) in etwa der Hälfte seiner Länge hinein und den Bereich der Wände der Probenkammer etwa 5 mm in die Probennahme-Kammer (5) hinein bedeckt.

6. Probennehmer nach einem der Ansprüche 1 bis 5, dadurch gekennzeichnet, daß die abriebfeste Schicht eine keramische Schicht (18) ist.

7. Probennehmer nach einem der Ansprüche 1 bis 6, dadurch gekennzeichnet, daß die Schicht (18) eine im wesentlichen oxidische Schicht ist.

8. Probennehmer nach Anspruch 7, dadurch gekennzeichnet, daß die oxidische Schicht Al₂O₃ ist.

9. Probennehmer nach Anspruch 7, dadurch gekennzeichnet, daß die oxidische Schicht ZrO₂ ist.

10. Probennehmer nach einem der Ansprüche 1 bis 6, dadurch gekennzeichnet, daß die Schicht (18) eine im wesentlichen aus Nitriden bestehende Schicht ist.

11. Probennehmer nach einem der Ansprüche 1 bis 10, dadurch gekennzeichnet, daß die Schicht (18) durch Plasmaspritzen oder durch Flammspritzen aufgetragen ist.

## Claims

1. A sampler (1) for molten metal, with at least two dish-shaped, metallic partial bodies (2,3) which are arranged with respect to each other so that their front faces (4) lie opposite each other, in which the metallic partial bodies form a sampling chamber (5), and with an inlet connection (6) opening via an orifice (7) into the chamber, in which the chamber formed by the dish-shaped, metallic partial bodies is divided into at least two chamber regions (11,12) of differing thickness, in which these chamber regions lie one behind the other in the direction of the inlet connection, viewed in the direction of the inflowing metal, and in each case are separated from each other by a graduation (10) which forms an impact surface (16) for the liquid metal, in which the chamber region (12) with the smaller thickness (15) forms the end of the sampling chamber lying opposite the inlet connection, characterised in that the chamber (5), at least in the region of the orifice (7) and the wall region (16) lying opposite the orifice (7), forming the impact surface for the inflowing metal, is coated with an abrasion-proof layer (18) which is stable with respect to temperature up to approximately 1700° C, in which the wall lying furthest away from the inlet connection (6), viewed in the direction of the inflowing metal, remains uncoated. and that the front faces (4) of the dish-shaped partial bodies (2,3) remain free of coating by the abrasion-proof coating material.

2. A sampler according to Claim 1, characterised in that the abrasion-proof layer (18) has a thickness of 5 to 200 micrometres.

3. sampler according to Claim 2, characterised in that the abrasion-proof layer (18) has a thickness of 30 to 100 micrometres.

4. A sampler according to Claim 3, characterised in that the abrasion-proof layer (18) has a thickness of approximately 60 micrometres.

5. A sampler according to one of Claims 1 to 4, characterised in that the abrasion-proof layer (18), from the orifice (7), covers the region of the inlet connection (6) to approximately half its length and covers the region of the walls of the sample chamber approximately 5 mm into the sampling chamber (5).

6. A sampler according to one of Claims 1 to 5, characterised in that the abrasion-proof layer is a ceramic layer (18).

7. A sampler according to one of Claims 1 to 6, characterised in that the layer (18) is a substantially oxidic layer.

8. A sampler according to Claim 7, characterised in that the oxidic layer is Al₂O₃.

9. A sampler according to Claim 7, characterised in that the oxidic layer is ZrO₂.

10. A sampler according to one of Claims 1 to 6, characterised in that the layer (18) is a layer consisting substantially of nitrides.

11. A sampler according to one of Claims 1 to 10, characterised in that the layer (18) is applied by plasma spraying or by flame spraying.

## Revendications

1. Échantillonneur pour métaux en fusion comportant au moins deux carcasses métalliques partielles, en forme de coque, (2,3) qui sont disposées, l'une par rapport à l'autre, de façon que leurs surfaces frontales (4) soient situées l'une en face de l'autre, les carcasses métalliques partielles formant une chambre d'échantillonnage (5), ainsi qu'une tubulure d'entrée (6) qui débouche dans la chambre par une embouchure (7), la chambre formée par les carcasses métalliques partielles en forme de coque étant divisée en au moins deux zones de chambre (11, 12) d'épaisseur différente, ces zones de chambre se situant l'une derrière l'autre dans la direction de la tubulure d'entrée, vu dans le sens du métal qui afflue, et étant séparées l'une de l'autre par un décrochement (10) qui forme une surface de rebond (16) pour le métal en fusion, la zone de chambre (12) de la plus petite épaisseur (15) formant l'extrémité de la chambre d'échantillonnage qui est située à l'extrémité opposée à la tubulure d'entrée, caractérisé par le fait que la chambre (5) est revêtue, au moins dans la zone de l'embouchure (7) et dans la zone de paroi (16) située en face de l'embouchure (7) et formant la surface de rebond pour le métal qui afflue, d'une couche (18) résistant à l'usure par frottement, stable à la température jusqu'à environ 1700°C, la paroi la plus éloignée de la tubulure d'entrée (6), vu dans le sens du métal qui afflue, restant non revêtue, et que les surfaces frontales (4) des carcasses partielles en forme de coque (2, 3) restent exemptes de la couche du matériau de revêtement résistant à l'usure par frottement.

2. Échantillonneur selon la revendication 1, caractérisé par le fait que la couche (18) résistant à l'usure par frottement présente une épaisseur de 5 à 200 micromètres.

3. Échantillonneur selon la revendication 2, caractérisé par le fait que la couche (8) résistant à l'usure par frottement présente une épaisseur de 30 à 100 micromètres.

4. Échantillonneur selon la revendication 3, caractérisé par le fait que la couche (8) résistant à l'usure par frottement présente une épaisseur d'environ 60 micromètres.

5. Échantillonneur selon l'une des revendications 1 à 4, caractérisé par le fait que, à partir de l'embouchure (7), la couche (18) résistant à l'usure par frottement recouvre la zone de la tubulure d'entrée (6) sur à peu près la moitié de sa longueur et la zone des parois de la chambre d'échantillonnage sur à peu près 5 mm dans la chambre d'échantillonnage (5).

6. Échantillonneur selon l'une des revendications 1 à 5, caractérisé par le fait que la couche résistant à l'usure par frottement cst une couche céramique (18).

7. Échantillonneur selon l'une des revendications 1 à 6, caractérisé par le fait que la couche (8) est une couche essentiellement obtenue par voie d'oxydation.

8. Échantillonneur selon la revendication 7, caractérisé par le fait que la couche essentiellement obtenue par voie d'oxydation est Al₂O₃.

9. Echantillonneur selon la revendication 7, caractérisé par le fait que la couche obtenue par voie d'oxydation est ZrO₂.

10. Échantillonneur selon l'une des revendications 1 à 6, caractérisé par le fait que la couche (18) est une couche essentiellement constituée de nitrures.

11. Échantillonneur selon l'une des revendications 1 à 10, caractérisé par le fait que la couche (18) est appliquée par projection au jet de plasma ou par projection à la flamme.
